# EUROPÄISCHE PATENTANMELDUNG

(11) **EP 1 099 570 A2**
(43) Veröffentlichungstag der Anmeldung: **16.05.2001**
(21) Anmeldenummer: 00110305.0
(22) Anmeldetag: 13.05.2000
(51) Int. Cl.: B44C 5/04

(54) **flächiges Bauelement**

(30) Priorität: 09.11.1999 DE 29919639 U
(71) Anmelder: Haag, Frank, 47623 Kevelaer (DE); Zibulka, Manfred, 47623 Kevelaer (DE)
(72) Erfinder: Haag, Frank, 47623 Kevelaer (DE); Zibulka, Manfred, 47623 Kevelaer (DE)
(74) Vertreter: Stenger, Watzke & Ring Patentanwälte

(57) **Zusammenfassung**

Die vorliegende Erfindung betrifft ein flächiges Bauelement für den Einsatz im Innen- und Außenbereich mit einer transparenten Abdeckung (1) und einem mit der Abdeckung (1) fest verbundenen Bildträger (3), welcher mit seiner ein Bild aufweisenden Seite der Abdeckung (1) zugewandt ist, wobei das Bauelement einfach aufgebaut und kostengünstig herstellbar ist sowie eine Vielzahl gestalterischer Möglichkeiten eröffnet.

## Beschreibung

Die vorliegende Erfindung betrifft ein flächiges Bauelement für den Einsatz im Innen- und Außenbereich.

Es ist im Stand der Technik bekannt beim Bau von Gebäuden sowohl im Innenbereich als auch im Außenbereich einzelne flächige Bauelemente aus unterschiedlichsten Werkstoffen zu verwenden. Solche Bauelemente werden u. a. als Ausfachelemente für die Verkleidung von Gebäudefassaden, für Decken, Wände, Türen, Balkonverkleidungen, als Fensterbänke oder dergleichen verwendet werden. Aus ästhetischen Gründen kommen hierbei neben Bauelementen aus preisgünstigen Werkstoffen, wie beispielsweise Beton, auch einzelne Bauelemente aus kostbareren Werkstoffen mit gefälligem Aussehen zum Einsatz. Hierzu zählen u. a. Steine wie z. B. Marmor, Granit und andere Natursteine.

Solche Baustoffe sind nicht nur teuer in der Anschaffung, sondern weisen zusätzlich Empfindlichkeiten gegenüber bestimmten äußeren Einflüssen auf. Damit ist ihre Verwendung in bestimmten Bereichen nur beschränkt möglich.

Es besteht zudem ein Bedarf nach flächigen Bauelementen, die in vielfältiger Weise zu gestalterischen Zwecken eingesetzt werden können.

Davon ausgehend liegt der vorliegenden Erfindung die **Aufgabe zugrunde**, ein flächiges Bauelement zu schaffen, welches einfach aufgebaut und kostengünstig herstellbar ist sowie eine Vielzahl gestalterischer Möglichkeiten eröffnet.

Die technische **Lösung** besteht erfindungsgemäß in einem flächigen Bauelement für den Einsatz im Innen- und Außenbereich mit einer transparenten Abdeckung und einem mit der Abdeckung fest verbundenen Bildträger, welcher mit seiner ein Bild aufweisenden Seite der Abdeckung zugewandt ist.

Ein solches Bauelement eröffnet eine Vielzahl von Möglichkeiten. So kann beispielsweise der Bildträger eine Abbildung einer Oberfläche eines natürlichen Baustoffes aufweisen. Auf diese Weise kann verblüffend einfach und täuschend ähnlich ein teures Naturmaterial nachgeahmt werden und dieses auf eine sehr kostengünstige Art. Es ist aber auch weiterhin denkbar, anstelle von Abbildungen von Oberflächen natürlicher Baustoffen den Bildträger mit anderen Abbildungen zu versehen. So können mit erfindungsgemäßen Bauelementen beispielsweise auch Firmenlogos, Schriftzüge oder ähnliches realisiert werden. Es ist auch möglich, die Bildträger mit Abbildungen von berühmten Kunstwerken, Landschaften, Skylines oder dergleichen zu versehen.

Eine Möglichkeit einer transparenten Abdeckung ist durch eine transparente Abdeckung aus Glas gegeben. Die transparente Abdeckung kann jedoch auch aus anderen Materialien wie Plexiglas oder weiteren transparenten Kunststoffen gebildet sein. Weist die transparente Abdeckung eine Strukturierung auf, können beispielsweise dreidimensionale Effekte erzeugt werden. So können beispielsweise entsprechende Strukturen in der transparenten Abdeckung das Erscheinungsbild einer auf dem Bildträger abgebildeten Oberfläche eines natürlichen Baustoffes noch realistischer erscheinen lassen. So kann unter anderem bei einem natürlichen Baustoff, welcher gewöhnlich eine glänzende, glatte Oberfläche aufweist, die transparente Abdeckung mit einer entsprechenden glatten, glänzenden Oberfläche ausgestattet sein. Ist die Oberfläche des nachzubildenden natürlichen Baustoffs dahingegen matt oder weist sie gar eine bestimmte Struktur auf, so kann die transparente Abdeckung mattiert bzw. mit einer entsprechenden Struktur versehen sein, um die Nachbildung noch realistischer erscheinen zu lassen.

Der Bildträger kann in einfacher Weise durch Bedrucken mit dem Bild versehen werden. Als besonders billiges Ausgangsmaterial für den Bildträger mit einer vergleichsweise guten Wiedergabe eines auf ihm aufgedruckten Bildes wird in vorteilhafter Weise Papier vorgeschlagen. Es ist aber auch denkbar, als Bildträger, Fotografien, bemalte Bildträger oder dergleichen zu verwenden. Im Falle eines bedruckten Bildträgers kann die auf dem Bildträger abgebildete Struktur in digitaler Weise von einem Vorbild erfaßt worden sein. So ist es beispielsweise möglich, die Oberfläche von natürlichen Baustoffen direkt durch Einscannen zu digitalisieren und dann mittels elektronischer Datenverarbeitung Ausdrucke von dem digitalisierten Abbild der Oberfläche zu erzeugen. Die Bildaufnahme kann jedoch auch in anderer Weise, beispielsweise mittels einer Digitalkamera, mittels konventioneller Fotoapparate oder ähnlichem erfolgen.

Zur Ausbildung der festen Verbindung wird mit der Erfindung vorgeschlagen, zwischen der transparenten Abdeckung und dem Bildträger eine erste, transparente Harzschicht aufzubringen. Die transparente Harzschicht wird auf die transparente Abdeckung aufgebracht und anschließend der Bildträger auf diese Harzschicht so aufgesetzt, daß die mit dem Bild versehene Seite des Bildträgers in Richtung der transparenten Abdeckung weist. Nach Aushärten des Harzes ist nun eine feste Verbindung hergestellt. Es kann weiterhin zur besseren Sicherung des Bildträgers gegenüber äußeren Einflüssen eine weitere Harzabdeckung auf die Rückseite des Bildträgers aufgebracht werden. Diese muß nicht notwendigerweise transparent sein, sondern kann beispielsweise eingefärbt sein, um zusätzlich zum optischen Erscheinungsbild des erfindungsgemäßen Bauelementes beizutragen.

Ein weiterer Vorschlag der Erfindung besteht darin, auf ein erfindungsgemäßes Bauelement rückseitig, d. h. auf der der transparenten Abdeckung abgewandten Seite, eine Haftschicht ausgebildet wird. Eine solche kann beispielsweise durch mit einem Klebstoff, z. B. einem Harz, verbundene Quarzsandschicht sein. Diese dient dazu, das erfindungsgemäße Bauelement für die spätere Verwendung mit herkömmlichen Befestigungsmitteln wie Klebern, Mörtel oder ähnlichem am Verwendungsort anzubringen.

Mit besonderem Vorteil wird vorgeschlagen, das erfindungsgemäße Bauelement fliesenförmig auszubilden. Wenn ein fliesenförmig ausgebildetes erfindungsgemäßes Bauelement zudem rahmenlos gefertigt ist, können mehrere erfindungsgemäße Bauelemente zu einer größeren Struktur zusammengefügt werden. Hierbei ist es von Vorteil, wenn sich im Falle einer auf dem Bildträger dargestellten Oberflächenstruktur eines natürlichen Baustoffes bei Aneinanderreihung der verschiedenen Fliesen ein durchgehendes Bild ergibt. D. h, daß beim Zusammenfügen zweier fliesenförmiger Bauelemente die beiden auf den fliesenförmigen Bauelementen vorgesehenen Abbilder sich an der Anschlußstelle kontinuierlich zu einem Gesamtbild ergänzen. Hierbei ist es weiterhin von Vorteil, wenn ein derartiges Fliesensystem, aus dem ein Gesamtbild entstehen soll, aus einer kleinen Anzahl von Bauelementen mit unterschiedlich ausgebildeten Bildträgern besteht. Diese können derart geschickt ausgebildet sein, daß sie sich in einer großen Vielzahl von Möglichkeiten untereinander kombinieren lassen, wobei sich die auf den Bildträgern abgebildeten Bilder jeweils an den Berührungskanten der fliesenförmigen Bauelemente zu einem kontinuierlichen Gesamtbild ergänzen. Im Falle anderer Abbildungen als der oben genannten Oberflächen von natürlichen Baustoffen kann ein solches Fliesensystem durch puzzleartiges Zusammenfügen zu einem Gesamtbild ergänzt werden.

Weitere Vorteile und Merkmale werden durch das anhand der beigefügten Zeichnung im folgenden beschriebenen Ausführungsbeispiel deutlich. Dabei zeigt:

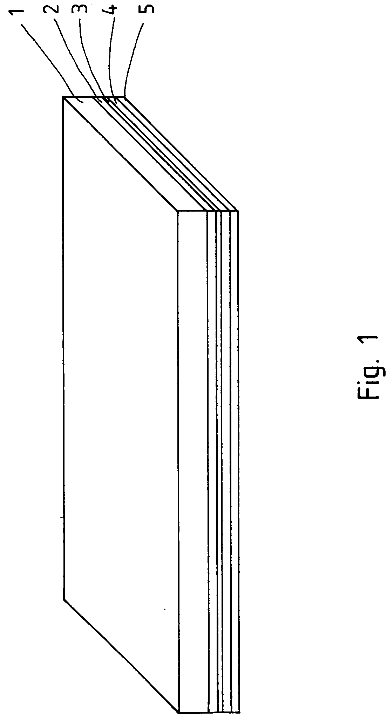

- Fig.1: eine schematische Darstellung eines erfindungsgemäßen, schichtförmig ausgebildeten flächigen Bauelements.

Fig. 1 zeigt schematisch den Aufbau eines erfindungsgemäßen flächigen Bauelements und ist keinesfalls maßstabsgerecht.

Das in Fig. 1 dargestellte Bauelement ist schichtartig aufgebaut und fliesenförmig ausgebildet. Es weist dabei eine transparente Abdeckung 1 auf, welche im vorliegenden Fall durch eine Glasscheibe realisiert ist. Auf die transparente Abdeckung 1 einseitig aufgebracht ist eine Schicht transparenten Harzes 2, auf die ein Bildträger 3 mit der Bildseite in Richtung der transparenten Glasabdeckung 1 aufgelegt ist. Rückseitig auf dem Bildträger 2 ist eine weitere Harzschicht 4 aufgebracht. Abschließend ist auf die Harzschicht 4 eine Haftschicht 5, in diesem Falle gebildet durch Quarzsand, aufgebracht.

Zur Herstellung des erfindungsgemäßen Bauelements wird die transparente Abdeckung 1 einseitig mit einem transparenten Harz 2 überzogen, in welches der Bildträger 3 mit seiner die Abbildung aufweisenden Seite in Richtung der transparenten Abdeckung 1 aufgelegt wird. Das noch feuchte Harz durchtränkt den Bildträger 3 und verbindet diesen beim Aushärten fest mit der transparenten Abdeckung 1. Zum Schutz des Bildträgers 2 wird rückseitig auf den Bildträger 2 eine weitere Harzschicht 4 aufgebracht, auf die direkt nach dem Aufbringen Quarzsand als Haftschicht 5 aufgestreut wird. Nach dem Aushärten der Harzschicht 4 ist der Quarzsand als Haftschicht 5 mit der Harzschicht 4 und damit mit dem erfindungsgemäßen Bauelement fest verbunden und kann zum einfachen Verbinden eines erfindungsgemäßen Bauelements, z. B. als Fensterbank oder Wand- oder Fassadenverkleidung, mit einer Aufnahmefläche genutzt werden.

Als Bildträger 3 wurde in diesem Fall eine Abbildung einer Oberfläche eines natürlichen Baustoffes verwendet. Jedoch sind auch wie bereits oben erwähnt weitere Abbildungen auf dem Bildträger möglich.

Das gezeigte Ausführungsbeispiel eines fliesenförmigen Bauelements kann unterschiedliche Geometrien aufweisen. So kann die Fliese quadratisch, rechteckig, dreieckig, rund oder in anderen Formen ausgeführt sein. Sie kann gegebenenfalls auch gekrümmt, sowohl konvex als auch konkav, ausgebildet sein.

Mit der vorliegenden Erfindung ist ein Bauelement gegeben, welches kostengünstig und einfach auch im großindustriellen Maßstab herstellbar ist und mit dem sich eine Vielzahl von gestalterischen Möglichkeiten ergeben.

Ein solches Bauelement eignet sich insbesondere auch hervorragend zur einfachen, kostengünstigen und schnellen nachträglichen Ausstattung einer Räumlichkeit mit einem solchen dekorativen Bauelement. Die erfindungsgemäßen Bauelemente lassen sich als vergleichsweise flache, leichte fliesenförmige Bauelemente realisieren, was eine Vielzahl von Einsatzmöglichkeiten eröffnet.

Das hier ausgeführte Ausführungsbeispiel ist keineswegs beschränkend, sondern dient lediglich der näheren Erläuterung des in den Schutzansprüchen beanspruchten Gegenstandes.

### Bezugszeichenliste

- 1: transparente Abdeckung
- 2: transparente Harzschicht
- 3: Bildträger
- 4: Harzschicht
- 5: Haftschicht

## Patentansprüche

1. Flächiges Bauelement für den Einsatz im Innen- und Außenbereich mit einer transparenten Abdeckung (1) und einem mit der Abdeckung (1) fest verbundenen Bildträger (3), welcher mit seiner ein Bild aufweisenden Seite der Abdeckung (1) zugewandt ist.

2. Bauelement nach Anspruch 1, dadurch gekennzeichnet, daß der Bildträger (3) eine Abbildung einer Oberfläche eines natürlichen Baustoffes aufweist.

3. Bauelement nach einem der Ansprüche 1 oder 2, gekennzeichnet durch eine transparente Abdeckung (1) aus Glas.

4. Bauelement nach einem der Ansprüche 1 bis 3, dadurch gekennzeichnet, daß die transparente Abdeckung (1) eine Strukturierung aufweist.

5. Bauelement nach einem der Ansprüche 1 bis 4, gekennzeichnet durch einen durch Bedrucken mit einem Bild versehenen Bildträger (3).

6. Bauelement nach Anspruch 5, gekennzeichnet durch bedrucktes Papier als Bildträger (3).

7. Bauelemente nach einem der Ansprüche 1 bis 6, dadurch gekennzeichnet, daß zur Ausbildung der festen Verbindung zwischen der Abdeckung (1) und dem Bildträger (3) eine erste, transparente Harzschicht (2) zwischen die Abdeckung (1) und den Bildträger (3) eingebracht wird.

8. Bauelement nach Anspruch 7, gekennzeichnet durch eine weitere Harzschicht (4) auf der der ersten Harzschicht (2) gegenüberliegenden Seite des Bildträgers (3).

9. Bauelemente nach einem der Ansprüche 1 bis 8, gekennzeichnet durch eine rückseitig aufgebrachte Haftschicht (5).

10. Bauelemente nach einem der Ansprüche 1 bis 9, dadurch gekennzeichnet, daß es fliesenförmig ausgebildet ist.

11. Bauelement nach Anspruch 10, dadurch gekennzeichnet, daß es rahmenlos ausgebildet ist.
